# FASCICULE DE BREVET EUROPEEN

(11) **EP 0 689 711 B1**
(45) Date de publication et mention de la délivrance du brevet: **24.11.1999**
(21) Numéro de dépôt: 95903744.1
(22) Date de dépôt: 30.12.1994
(51) Int. Cl.: G11B 33/04

(54) **EMBALLAGE PRESENTOIR POUR DISQUE COMPACT**
PRASENTATIONSBEHALTER FUR CD
DISPLAY PACKAGE FOR A COMPACT DISC

(30) Priorité: 14.01.1994 CH 11094
(43) Date de publication de la demande: 03.01.1996
(73) Titulaire: Munier, Bernard Charles, 1450 Ste-Croix (CH)
(72) Inventeur: Munier, Bernard Charles, 1450 Ste-Croix (CH)
(86) Numéro de dépôt international: CH9400248
(87) Numéro de publication internationale: WO9519623

(56) Documents cités:
- EP-A- 0 568 298
- DE-U- 9 305 485
- FR-A- 2 602 084
- US-A- 5 154 284

## Description

L'invention a pour objet un emballage présentoir pour disque compact, notament CD audio, CD photos, CD interactif, CD rom, mini-disque, disquette et tout autre disque compact ou mini.

Actuellement les disques compacts sont généralement vendus dans des boîtes en plastique ou dans des emballages en cartons.

Dans la demande de brevet européen EP-A-0503171 il est décrit un emballage pour disque compact comportant une platine sur laquelle est fixé le disque et un support de base (Grundflache) en carton. Sur un des volets du support, une pochette apparemment non transparente permet l'insertion d'au moins une feuille comportant des informations. Cet emballage nécessite l'impression de carton ce qui est relativement cher et ne comporte que peu de place pour l'information, de plus il se présente fermé et donc peu attractif pour les acheteurs.

Dans la demande de brevet PCT WO-A-8910882 il est décrit un emballage en plastique comprenant une première poche avec un fond étudié pour empêcher le disque compact de se rayer et une seconde poche destinée à contenir un livret donnant des informations sur le contenu du disque compact. Cet emballage est aussi prévu pour être stocké dans un classeur, mais rien n'a été prévu pour accrocher l'attention d'un acheteur éventuel; ce dernier doit ouvrir l'emballage pour avoir accès à l'information.

DE-U-9305485 décrit un emballage présentoir pour disque ou disquette comportant un support plan à deux volets, le premier volet permettant la fixation d'un livret d'accompagnement et le second volet comprenant trois poches superposées pouvant chacune recevoir un disque. Deux trous - un sur chaque volet - disposés le long d'un des bords longitudinaux du support permettent de suspendre le support en position fermée.

Les disques compacts peuvent aussi contenir des images. Ainsi il est facile d'imaginer que dans un proche avenir, il sera possible d'acheter dans les stations touristiques des disques compacts contenant des vues de la station. Il sera alors utile de pouvoir posséder un emballage mettant clairement en valeur ce produit nouveau.

L'invention a pour but de fournir un emballage pour disque compact simple, bon marché, neutre, c'est-à-dire sans impression et permettant de lui adjoindre des informations imprimées sur papier ou photocopiées de manière à bien mettre en valeur le contenu du disque. L'invention a aussi pour but de fournir un emballage permettant de présenter le disque et son contenu d'une manière attractive et facile à stocker.

Ces buts sont atteints avec l'emballage présentoir pour compact disque selon l'invention définie à la revendication 1. Les caractéristiques du préambule de la revendication 1 sont divulguées par EP-A-0 503 171.

En effet, l'emballage selon l'invention permet une présentation attractive, car on peut le suspendre sur un présentoir et il peut contenir beaucoup d'information directement visible.

L'invention sera mieux comprise et ses caractéristiques et ses avantages apparaîtront mieux à la lecture de la description de différentes formes d'exécution, donnée uniquement à titre d'exemple, en regard des dessins sur lesquels :

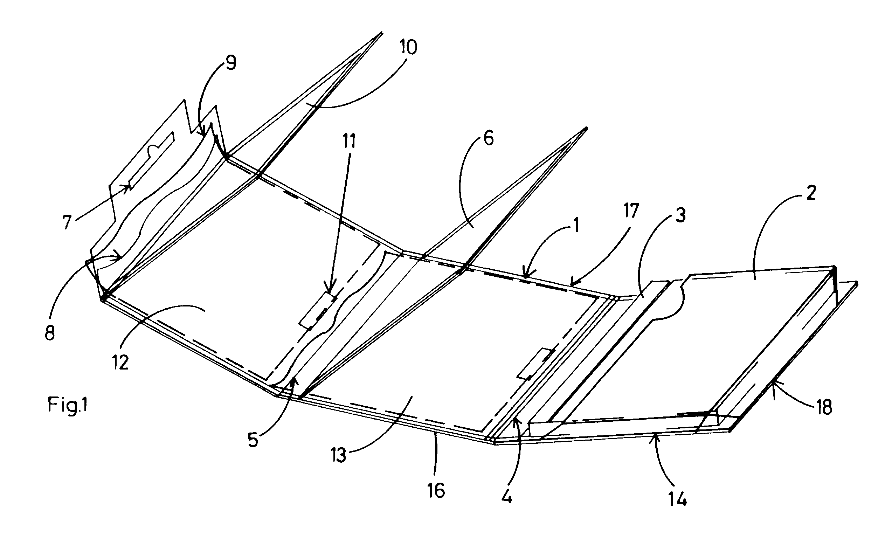

- la figure 1: représente une vue en perspective d'une réalisation préférée de l'emballage présentoir comportant trois volets.
- les figures 2 A,B et C: représentent trois variantes de l'emballage présentoir avec un support opaque.
- les figures 3 A,B et C: représentent trois autres variantes de l'emballage présentoir avec un support transparent.
- les figures 4 et 5: représentent schématiquement plusieurs possibilités de placer des feuilles d'information dans un emballage présentoir selon l'invention.
- les figures 6,7 et 8: représentent d'autres possibilités de réaliser l'emballage présentoir de l'invention.

Comme on le voit sur la figure I l'emballage présentoir est représenté réalisé avec un support 1 en matière plastique opaque. A une de ses extrémités il représente une languette 7 comportant une ouverture pour le suspendre. A l'autre extrémité il comporte une poche 2 contenant une boîte 3 en plastique dans laquelle est fixé un disque. Il pourrait aussi ne pas comporter de boîte, mais seulement une platine que l'on glisse dans la poche, on voit aussi que l'emballage présentoir a trois volets 12,13 et 14 articulé le long des lignes 4 et 5. Sur la face opposée à celle que l'on voit sur la figure le support comporte une feuille de matière transparente fixée le long des bords longitinaux 16,17 et le long du bord transversal 18 de manière à constituer une enveloppe présentant une ouverture du côté de la languette 7 et dans laquelle on peut introduire une feuille 8, sur laquelle figure une information attractive en ce qui concerne le contenu du disque.

Chaque volet 12 et 13 comporte sur la face opposée à l'enveloppe contenant la feuille 8 des feuilles en plastique transparent constituant aussi des enveloppes, dans lesquels il est possible d'introduire soit des feuilles 9 contenant une information soit des enveloppes transparentes 6 et 10 dans lesquels il est aussi possible d'introduire des feuilles d'information. Les feuilles transparentes fixées sur les volets 12 et 13 peuvent être, par exemple, collées sur trois côtés ou seulement collées sur deux côtés longitudinaux 16,17 et comporter des arretoirs 11.

Cet emballage présentoir a l'avantage d'être neutre, c'est-à-dire qu'il ne nécessite aucune impression. Ainsi il est facile de faire, même pour de petite série, des feuilles d'information.

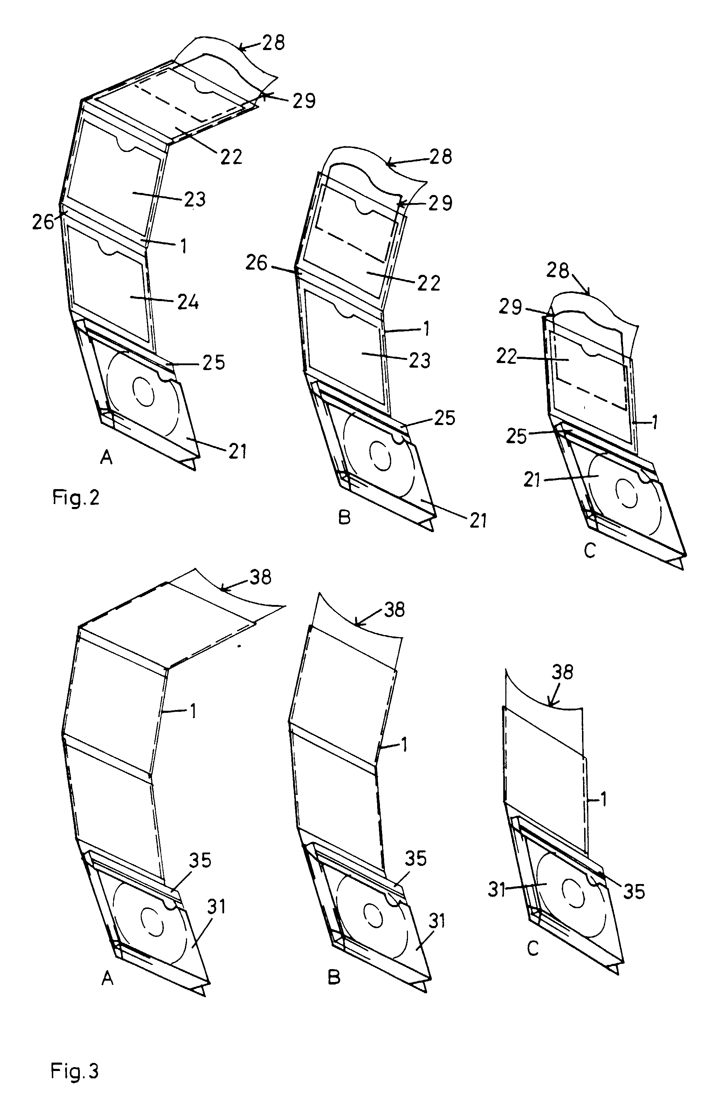

Sur les figures 2A,B et C il a été représenté trois réalisations de l'emballage présentoir comportant respectivement quatre, trois et deux volets. Dans ces formes d'exécution le support est en matière plastique souple opaque, par exemple du chlorure de polyvinyle ou polyéthylène. Le support 1 dans chacune de ces réalisations comporte à l'une de ses extrémités, une poche 21 dans laquelle il a été mis une boîte 25 contenant un disque compact et à l'autre extrémité une languette présentant un trou pour le suspendre. La languette est cachée par la feuille d'information 29 destinée à être introduite dans la poche 23 se trouvant sur la partie supérieure du support 1. Tandis que la feuille 28 est destinée à être introduite dans une poche longitudinale se trouvant sur la face opposée. Chaque face supérieure de chaque volet 22,23,24 présente des enveloppes dont la face supérieure est transparente.

Comme on peut le constater l'emballage présentoir une fois suspendu présente de grandes surfaces sur lesquelles il est possible de mettre de la publicité attractive.

Sur les figures 3A,B et C il a été représenté trois réalisations de l'emballage présentoir comportant respectivement quatre, trois, et deux volets. Dans ces formes d'exécution le support I est en matière transparente par exemple la même que celle qui constitue l'enveloppe. Dans cette forme d'exécution il sera possible d'introduire une feuille 38, imprimée sur les deux faces, dans l'enveloppe longitutinale. A l'une des extrémité de chacune des réalisations est disposé une poche 31 destinée à contenir une boîte 35 de disque compact et à l'autre extrémité une languette (non représentée) permettant de suspendre l'emballage. Cette forme de réalisation est plus facile à fabriquer que celle décrite ci-devant, mais elle peut contenir beaucoup moins d'information.

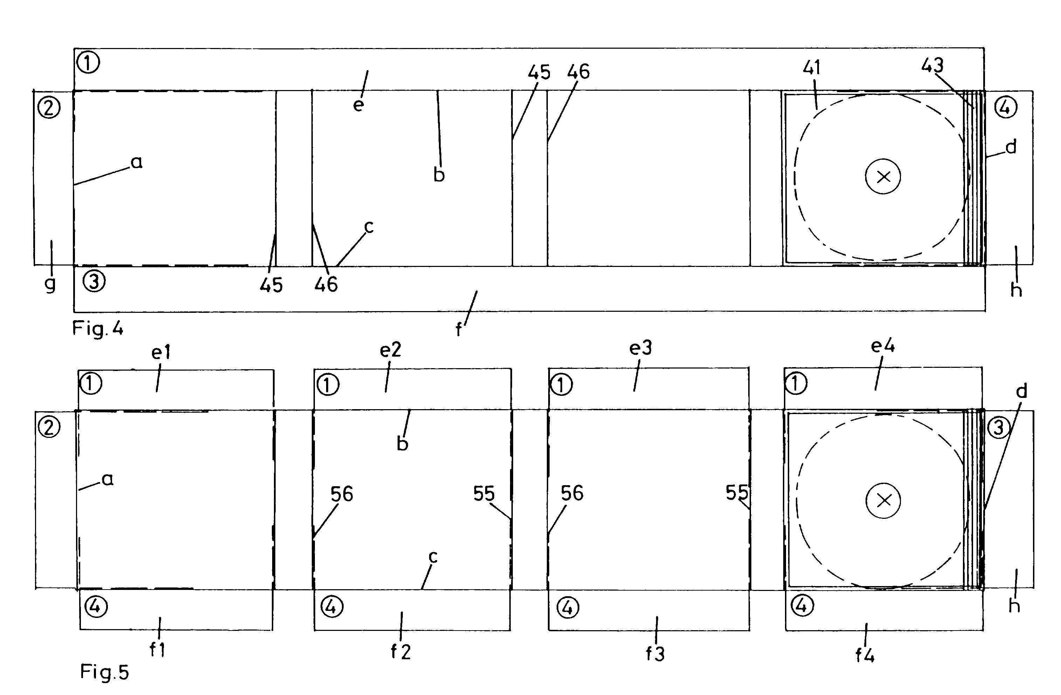

Sur la figure 4 il a été représenté un schéma d'une réalisation à quatre volets, qui s'articulent le long des lignes 45 et 46. Ce schéma a pour but d'illustrer les différentes possibilités de réaliser l'enveloppe au dos du support. Par exemple il est possible de faire une enveloppe longitudinale ayant trois côtés b,c et d avec une ouverture en a ou, ayant trois côtés a, b et c et une ouverture en d permettant d'introduire les feuilles d'information g et respectivement h. Il est aussi possible de réaliser des enveloppes transversales ayant pour côté a, b et d ou a, c et d et pour ouvertures c ou b permettant d'introduire les feuilles d'information f respectivement e. Chacune de ces réalisations comporte à l'une de ces extrémité une poche 41 destinée à contenir une boîte 43 pour disque compact et à l'autre extrémité une languette non représentée.

Sur la figure 5 il a été représenté un schéma d'une réalisation à quatre volets, qui s'articulent le long des lignes 55 et 56 comme pour la figure 4 ce schéma a pour but d'illustrer différentes possibilités de réaliser l'enveloppe au dos du support. Par exemple il est possible de réaliser une enveloppe transversale en plusieurs parties en fixant des feuilles transparentes en a et 55 puis en 56 et 55 du deuxième volet et ainsi de suite. Cette manière créera quatre sous-enveloppes qui pourront être ouvertes des deux côtés ou seulement d'un seul côté permettant d'introduire les feuilles d'information e1,e2,e3 et e4 respectivement f1,f2,f3 et f4. Les parties aux extrémités peuvent être ouvertes en a et d permettant d'introduire des feuilles g et h longitudinalement pour les volets d'extrémités. Comme pour les réalisations de la figure 4 toutes ces formes d'exécution comporte à leurs extrémités une poche et respectivement des moyens pour les suspendre.

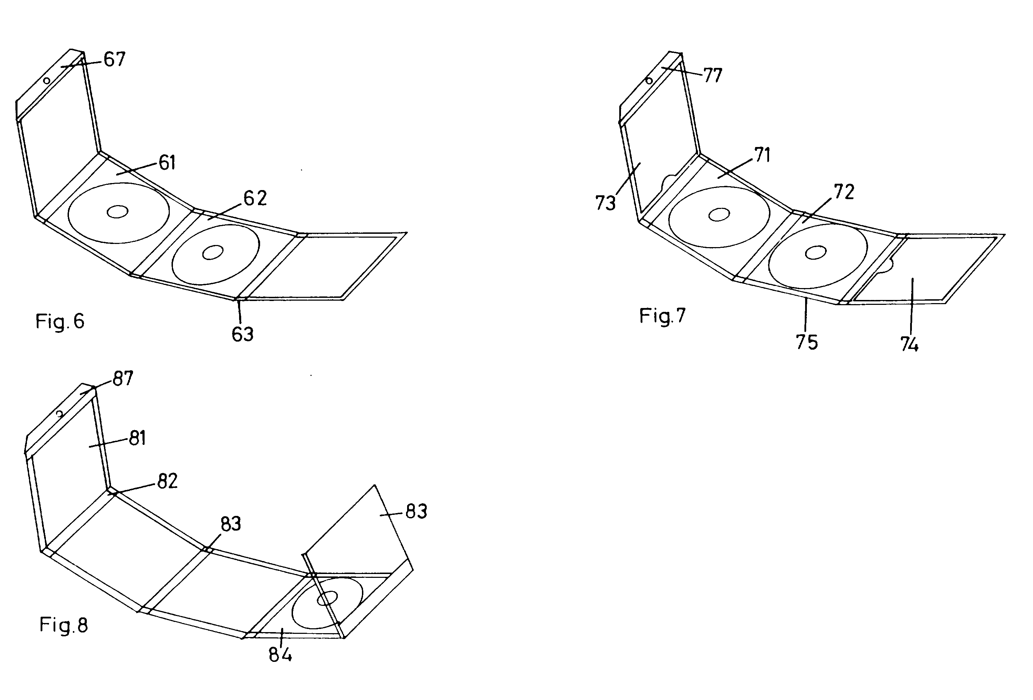

La forme d'exécution de la figure 6 présente un support 63 transparent comprend deux poches 61 et 62 destinées à recevoir chacune une boîte de disque ou une platine pour disque. Comme on peut le voir les poches ne sont pas sur des volets d'extrémité, par contre le moyen 67 pour suspendre l'emballage présentoir est à une extrémité.

La figure 7 représente un support opaque 75 comportant à son dos une enveloppe longitudinale et sur son devant quatre poches 71,72,73 et 74, les poches 71 et 72 étant conçues pour recevoir une boîte ou une platine contenant un disque. Tandis que les poches 73 et 74 sont destinées à recevoir des feuilles d'information. Cette réalisation comporte aussi une languette 77 permettant de la suspendre.

La figure 8 représente un support transparent comportant quatre volets se terminant par un volet 84 destiné à contenir une feuille d'information, par contre le dernier volet comporte une boîte 83 contenant un disque. L'enveloppe dorsale est divisée en plusieurs parties 81,82,83. Les parties 82 et 83 sont des enveloppes transversales étroites permettant d'introduire des bandes de feuilles d'information utile lorsque l'emballage est plié. Cette forme possède aussi une languette 87 permettant de la suspendre et servant de fermeture lorsque l'emballage est plié.

Bien que toutes les formes d'exécution représentées comportent un support souple, l'invention peut aussi être réalisée avec un support rigide tel que du bois, du plastique rigide, du cuir ou du métal, par exemple de l'aluminium.

## Revendications

1. Emballage présentoir pour disque compact comportant un support plan (1) de forme oblongue pliable selon des plis perpendiculaires à sa longueur de manière à constituer des volets (12,13,14;22,23,24) de forme sensiblement identique et, sur l'un de ses volets des moyens (2 ; 21 ; 31 ; 41 ; 61 ou 62 ; 71 ou 72 ; 83) pour maintenir un disque compact, lesdits moyens de maintien étant constitués sur un de ses volets d'une boîte (24) destinée à contenir le disque ou d'une poche (2 ; 21 ; 31 ; 41 ; 61 ou 62 ; 71 ou 72) destinée à recevoir une boîte ou une platine dans laquelle respectivement sur laquelle est disposé un disque compact, caractérisé en ce que sur l'une des faces du support est fixé une feuille de matière transparente constituant avec le support au moins une enveloppe destinée à recevoir au moins une feuille comportant une information, et en ce que le support comprend à l'une de ses extrémités des moyens (7 ; 67 ; 77 ; 87) pour suspendre le support.

2. Emballage selon la revendication 1, caractérisé en ce que la boîte ou la poche est disposée sur le volet situé à l'extrémité opposée de celle comprenant les moyens pour le suspendre.

3. Emballage selon l'une des revendications 1 et 2, caratérisé en ce que le support est une feuille souple de matière transparente en matière synthétique par exemple en chlorure de polyvinyle, en polyéthylène.

4. Emballage selon l'une des revendications 1 et 2, caractérisé en ce que le support est constitué de plusieurs volets en matière rigide articulés entre-eux, par exemple en cuir, bois, aluminium.

5. Emballage selon l'une des revendications 1 à 4, caractérisé en ce qu' il comporte au moins trois volets.

6. Emballage selon l'une des revendications 1,2,et 4,5 caractérisé en ce que le support est en matière opaque et comporte sur chacune des ses faces une feuille en matière transparente de manière à constituer des poches sur chacune de ses faces.

7. Emballage selon l'une des revendications 1 à 6, caractérisé en ce que les moyens pour suspendre le support sont constitués par une languette (7 ; 67 ; 77 ; 87) disposée dans le prolongement du support comportant un trou.

8. Emballage selon l'une des revendications 1 à 7, caractérisé en ce que la feuille de matière transparente fixée sur le support est interompue au niveau des plis et est fixée seulement sur les bords longitudinaux (16, 17) du support.

9. Emballage selon l'une des revendications 1 à 7, caractérisé en ce que la feuille de matière transparente fixée sur le support est interrompue au niveau des plis (55, 56) et est fixée seulement transversalement au niveau de chaque plis.

10. Emballage selon l'une des revendications 1,2,4 à 9 caractérisé en ce que le support est une feuille opaque et comporte une feuille transparente couvrant entièrement une de ses faces, tandis que l'autre face comporte des poches au niveau de chaque volet.

11. Emballage selon l'une des revendications précédentes, caractérisé en ce que la boîte est collée ou soudée sur le support.

## Patentansprüche

1. Schaupackung für CD-Platte, umfassend einen ebenen Träger (1) länglicher Form, der gemäss senkrecht zu seiner Länge stehenden Falten zusammenlegbar ist, um Klappen (12, 13, 14; 22, 23, 24) merklich identischer Form zu bilden, und auf einer seiner Klappen Mittel (2; 21; 31; 41; 61 oder 62; 71 oder 72; 83), um eine CD-Platte zu halten, wobei die Haltemittel auf einer seiner Klappen aus einem zur Aufnahme der Platte bestimmten Gehäuse (24) oder aus einer Tasche (2; 21; 31; 41; 61 oder 62; 71 oder 72) gebildet sind, die dazu bestimmt ist, ein Gehäuse oder eine Tragplatte aufzunehmen, in der bzw. auf der eine CD-Platte angeordnet ist, dadurch gekennzeichnet, dass auf einer der Seiten des Trägers eine Folie aus durchsichtigem Material befestigt ist, die mit dem Träger wenigstens eine Hülle bildet, die dazu bestimmt ist, wenigstens ein eine Information umfassendes Blatt aufzunehmen, und dass der Träger an einem seiner Enden Mittel (7; 67; 77; 87) für das Aufhängen des Trägers umfasst.

2. Packung nach Anspruch 1, dadurch gekennzeichnet, dass das Gehäuse oder die Tasche auf der Klappe angeordnet ist, die am Ende liegt, welches demjenigen mit den Mitteln, um sie aufzuhängen, entgegengesetzt ist.

3. Packung nach einem der Ansprüche 1 und 2, dadurch gekennzeichnet, dass der Träger eine aus durchsichtigem Material bestehende biegsame Folie aus synthetischem Material, z.Bsp. Polyvinylchlorid, Polyethylen, ist.

4. Packung nach einem der Ansprüche 1 und 2, dadurch gekennzeichnet, dass der Träger aus mehreren beweglich miteinander verbundenen Klappen aus starrem Material gebildet ist, z.Bsp. aus Leder, Holz, Aluminium.

5. Packung nach einem der Ansprüche 1 bis 4, dadurch gekennzeichnet, dass sie mindestens drei Klappen umfasst.

6. Packung nach einem der Ansprüche 1, 2 und 4, 5, dadurch gekennzeichnet, dass der Träger aus undurchsichtigem Material ist und auf jeder seiner Seiten eine Folie aus durchsichtigem Material umfasst, um auf jeder seiner Seiten Taschen zu bilden.

7. Packung nach einem der Ansprüche 1 bis 6, dadurch gekennzeichnet, dass die Mittel für das Aufhängen des Trägers durch eine in der Verlängerung des Trägers angeordnete Zunge (7; 67; 77; 87) gebildet sind, die ein Loch umfasst.

8. Packung nach einem der Ansprüche 1 bis 7, dadurch gekennzeichnet, dass die auf dem Träger befestigte Folie aus durchsichtigem Material auf der Höhe der Falten unterbrochen ist und nur auf den Längsrändern (16, 17) des Trägers befestigt ist.

9. Packung nach einem der Ansprüche 1 bis 7, dadurch gekennzeichnet, dass die auf dem Träger befestigte Folie aus durchsichtigem Material auf der Höhe der Falten (55, 56) unterbrochen ist und nur quer auf der Höhe jeder Falte befestigt ist.

10. Packung nach einem der Ansprüche 1, 2, 4 bis 9, dadurch gekennzeichnet, dass der Träger eine undurchsichtige Folie ist und eine durchsichtige Folie umfasst, die vollständig eine seiner Seiten bedeckt, während die andere Seite auf der Höhe jeder Klappe Taschen umfasst.

11. Packung nach einem der vorangehenden Ansprüche, dadurch gekennzeichnet, dass das Gehäuse auf den Träger geklebt oder geschweisst ist.

## Claims

1. Display package for compact discs featuring an oblong, rectangular, flat holder (1) which may articulate at folds lying perpendicular to the longer sides so as to form substantially identical panels (12, 13, 14; 22, 23, 24), at least one of which features the means (2; 21; 31; 41; 61 or 62; 71 or 72; 83) to contain a compact disc, said maintaining means being constituted on one of its panels by a case (24) designed to contain a compact disc or by a pouch (2; 21; 31; 41; 61 or 62; 71 or 72) designed to hold either such a case or a plate in or on which, respectively, a compact disc is placed, characterised by the fact that on at least one side of the holder is affixed a sheet of transparent material covering at least one panel forming with the holder a pouch designed to hold at least one sheet of information, and that the holder features at one end the means (7; 67; 77; 87) to suspend the package.

2. Package according to claim 1, characterised by the fact that the case or pouch is located on the panel found at the end opposite the end featuring the means to suspend the packaging.

3. Package according to claims 1 and/or 2, characterised by the fact that the holder is made of a soft, transparent, synthetic material such as polyvinyl chloride or polyethylene.

4. Package according to claims 1 and/or 2, characterised by the fact that the holder features articulating panels made of some rigid material such as leather, wood or aluminum.

5. Package according to any of claims 1 to 4, characterised by the presence of at least three panels.

6. Package according to any of claims 1, 2, 4 and 5, characterised by the fact that the holder is made of an opaque material and features on each of its faces a sheet of transparent material so as to form pouches on each of its faces.

7. Package according to any of claims 1 to 6, characterised by the fact that the means to suspend the package consists of a flap (7; 67; 77; 87) at one end of the holder, containing an opening.

8. Package according to any of claims 1 to 7, characterised by the fact that the transparent sheet attached to the holder is interrupted at the folds, and is fixed only on the longitudinal edges (16, 17) of the holder.

9. Package according to any of claims 1 to 7, characterised by the fact that the transparent sheet attached top the holder is interrupted at the folds (55, 56), and is fixed only transversely at each articulation.

10. Package according to any claims 1, 2, 4 to 9, characterised by the fact that the holder is made of an opaque material and features a sheet of transparent material entirely covering one of its faces, while the other face features pouches on each panel.

11. Package according to any of the preceding claims and characterised by the fact that the CD case is glued or welded or otherwise bonded to the holder.
